# EUROPÄISCHE PATENTSCHRIFT

(11) **EP 1 671 991 B1**
(45) Veröffentlichungstag und Bekanntmachung des Hinweises auf die Patenterteilung: **10.08.2011**
(21) Anmeldenummer: 05026323.5
(22) Anmeldetag: 02.12.2005
(51) Int. Cl.: C08G 18/10, C08G 18/22, C08G 18/76

(54) **Reaktive Polyurethan-Prepolymere mit einem geringen Gehalt an monomeren Diisocyanaten**
Reactive polyurethane prepolymers with a low amount of monomeric diisocyanates
Prépolymères de polyuréthane réactifs ayant une faible teneur en diisocyanates monomèriques

(30) Priorität: 15.12.2004 DE 102004060284
(43) Veröffentlichungstag der Anmeldung: 21.06.2006
(73) Patentinhaber: Bayer MaterialScience AG, 51368 Leverkusen (DE)
(72) Erfinder: Gürtler, Christoph Dr., 50676 Köln (DE); Wintermantel, Matthias Dr., 51061 Köln (DE)

(56) Entgegenhaltungen:
- WO-A-97/46517
- WO-A-03/006521
- US-A- 4 623 709
- US-A- 5 902 835

## Beschreibung

Die vorliegende Erfindung betrifft reaktive Polyurethane mit einem geringen Gehalt an monomeren Diisocyanaten, sowie deren Herstellung und deren Verwendung in reaktiven ein- und zweikomponentigen Kleb-/Dichtstoffen, Montageschäumen, Vergussmassen sowie in Weich-, Hart- und Integralschäumen.

In diesen Anwendungen werden häufig so genannte Isocyanat (NCO)-Prepolymere eingesetzt, die dann mit Wasser (im Sinne eines so genannten 1K-Systems) oder mit Alkoholen oder Aminen (als 2K-System) ausgehärtet werden können. Diese NCO-Prepolymere weisen bevorzugt endständige Isocyanat (NCO)-Gruppen auf.

Um Polyurethane mit endständigen NCO-Gruppen zu erhalten, ist es üblich, polyfunktionelle Alkohole mit einem Überschuss an monomeren Polyisocyanaten, in der Regel Diisocyanate, zur Reaktion zu bringen und gegebenenfalls nicht umgesetztes Isocyanat nach der Reaktion wieder zu entfernen. Oftmals werden dabei jedoch Restmonomergehalte erzielt, die für den Einsatz als monomerenarme kennzeichnungsfreie Produkte im Kleb- und Dichtstoffsektor, die sich auch bei erhöhten Applikationstemperaturen ohne erhöhte Arbeitsplatzschutzmaßnahmen verarbeiten lassen, zu hoch sind.

Ferner können in Beschichtungen, Verklebungen oder Dichtstoffen enthaltene monomere Isocyanate im Laufe der Zeit migrieren oder durch Reaktion mit Luftfeuchtigkeit zur Freisetzung von CO₂ und den korrespondierenden Aminen führen, woraus wiederum andere unerwünschte Eigenschaften entstehen können.

Im Bereich von Lebensmittelverpackungen muss der Gehalt der durch migrierte Diisocyanate entstehenden Amine, insbesondere der primären aromatischen Amine, unter der auf Anilinhydrochlorid bezogenen Nachweisgrenze von 0,2 Mikrogramm Anilinhydrochlorid/100 ml Probe liegen (Bundesinstitut für gesundheitlichen Verbraucherschutz und Veterinärmedizin, BGVV, nach amtlicher Sammlung von Untersuchungsverfahren nach § 35 LMBG - Untersuchung von Lebensmitteln/Bestimmung von primären aromatischen Aminen in wässrigen Prüflebensmitteln).

Daher besteht Bedarf an reaktiven Polyurethanen bzw. Polyurethan-Prepolymeren und darauf basierenden reaktiven ein- und zweikomponentigen Kleb-/Dichtstoffen, Montageschäumen, Vergussmassen sowie Weich-, Hart- und Integralschäume mit einem drastisch reduzierten Anteil an monomeren Diisocyanaten von bevorzugt unter 0,1 Gew.%.

Ferner ist es wünschenswert, dass die hergestellten NCO-Prepolymere möglichst niedrige Viskositäten aufweisen, damit bei der Verarbeitung und Applikation der Kleb- und Dichtstoffe möglichst kein zusätzliches Lösungsmittel zur Viskositätseinstellung zugesetzt werden muss.

Typischerweise werden zur Herstellung solcher die vorstehenden Bedingungen erfüllenden NCO-funktionellen Prepolymeren für den Dicht- und Klebstoffbereich zinnorganische Verbindungen wie das Dibutylzinn-dilaurat (DBTL) oder Wismut-Carboxylate eingesetzt.

Das Dokument WO 03/006521 A (Seite 12 Zeilen 1-15) offenbart zum Beispiel ein Verfahren zur Herstellung von reaktiven Polyurethanen mit einem NCO-Gehalt von 4-12% und einem Gehalt an monomeren asymmetrischen Diisocyanaten von 0,01 bis 0,3 Gew.- % durch Reaktion von mindestens einem monomeren asymmetrischen Diisocyanat mit einem Molekulargewicht von 160 g/mol bis 500 g/mol mit, mindestens einem Diol mit einem Molekulargewicht von 60 g/mol bis 2000 g/mol, wobei das Verhältnis von Isocyanatgruppen zu Hydroxylgruppen von 1,05 zu 1 bis 2,0 zu 1 beträgt, in Gegenwart von 0,01% Dibutylzinn-dilaurat (Beispiele 1 und 2 von WO 03/006521 A).

An Zinnverbindungen ist jedoch vor allem bei Lebensmittelkontakt ihre Toxizität hinderlich. Wismut-Carboxylate gelten dagegen als toxikologisch unbedenklich führen sie zu etwas höheren Viskositäten der Endprodukte bei ebenfalls sehr niedrigen Restmonomerengehalten.

Die Aufgabe der vorliegenden Erfindung bestand daher nun darin Katalysatoren aufzufinden, welche zu mindestens den gleichen niedrigen Restmonomergehalten im Prepolymer führen, wie bei Verwendung der vorstehend genannten Katalysatorklassen, jedoch nicht die Toxizität von Zinnverbindungen aufweisen und zur Prepolymeren führen, die vorzugsweise niedrigere Viskositäten aufweisen als analog hergestellte unter Verwendung von Wismutkatalysatoren.

Überraschenderweise wurde nun gefunden, dass spezielle fluortragende Zirkon-(IV)-acetylacetonat-Komplexe die gestellte Aufgabe lösen.

Bevorzugt tragen die erfindungsgemäß zu verwendenden Zirkon-(IV)-acetylacetonat-Komplexe je Acetylacetonatligand wenigstens eine CF₃-Gruppe, besonders bevorzugt enthalten die Zirkon-(IV)-acetylacetonat-Komplexe ausschließlich Acetylacetonatliganden mit wenigstens einer CF₃-Gruppe. Ganz besonders bevorzugt sind Tris-(1,1,1-trifluoracetylacetonato)zirkon(IV) und Tris-(1,1,1,5,5,5-Hexafluoracetylacetonato)Zirkon(IV).

Der Gegenstand der vorliegenden Erfindung ist ein Verfahren zur Herstellung von NCO-funktionellen Polyurethanprepolymeren mit einem NCO-Gehalt von 0,2 - 12 Gew.-%, bei dem
A) mindestens ein monomeres asymmetrisches Diisocyanat mit einem Molekulargewicht von 160 g/mol bis 500 g/mol und
B) mindestens ein Polyetherpolyol und/oder Polyesterpolyol
C) in Gegenwart von Zirkon-(IV)-acetylacetonat-Komplexen, wobei wenigstens ein im Katalysator enthaltener Acetylacetonatligand einen Fluorsubstituenten trägt,

in einem Verhältnis von Isocyanatgruppen zu Hydroxylgruppen von 1,05 zu 1 bis 2,0 zu 1 miteinander umgesetzt werden.

Der NCO-Gehalt der so erhältlichen reaktiven Polyurethan-Prepolymere beträgt bevorzugt 0,5 bis 10 Gew.-% und insbesondere bevorzugt 1,0 bis 8 Gew.-%.

Monomere asymmetrische Diisocyanate A) im Sinne dieser Erfindung sind aromatische, aliphatische oder cycloaliphatische Diisocyanate mit einem Molekulargewicht von 160 g/mol bis 500 g/mol, die NCO-Gruppen mit einer unterschiedlichen Reaktivität gegenüber Polyolen besitzen. Die unterschiedliche Reaktivität der NCO-Gruppen des Diisocyanats entsteht durch unterschiedlich benachbarte Substituenten zu den NCO-Gruppen am Molekül, die beispielsweise durch sterische Abschirmung die Reaktivität der einen NCO-Gruppe im Vergleich zur anderen NCO-Gruppe herabsetzen und/oder durch unterschiedliche Bindung einer NCO-Gruppe an den Molekülrest, beispielsweise in Form einer primären oder sekundären NCO- Gruppe.

Beispiele für geeignete aromatische asymmetrische Diisocyanate sind 2,4-Toluylendiisocyanat (2,4-TDI), Naphthalin-1,8-diisocyanat (1,8-NDI), Diphenylmethan-2,4'-diisocyanat (2,4'-MDI).

Beispiele für geeignete cycloaliphatische asymmetrische Diisocyanate sind 1-Isocyanatomethyl-3-isocyanato-1,5,5-trimethyl-cyclohexan (Isophorondiisocyanat, IPDI), 1-Methyl-2,4-diisocyanatocyclohexan oder Hydrierungsprodukte der vorgenannten aromatischen Diisocyanate, insbesondere hydriertes 2,4'-MDI.

Beispiele für aliphatische asymmetrische Diisocyanate sind 1,6- Diisocyanato-2,2,4-trimethyl-hexan,1,6-Diisocyanato-2,4,4-trimethylhexan und Lysindiisocyanat.

Bevorzugte asymmetrische Diisocyanate sind 2,4-Toluylendiisocyanat (2,4-TDI), Diphenylmethan-2,4'-diisocyanat (2,4'-MDI) und 1-Isocyanatomethyl-3-isocyanato-1,5,5-trimethyl-cyclohexan (Isophorondiisocyanat, IPDI).

Im Rahmen der Erfindung wird unter Diphenylmethan-2,4'-Diisocyanat (2,4'-MDI) ein Polyisocyanat mit einem Gehalt an 2,4'-MDI von größer 95 Gew.-%, besonders bevorzugt von größer 97,5 Gew.-% verstanden. Außerdem liegt der Gehalt an 2,2'-MDI unter 0,5 Gew.-%, besonders bevorzugt unter 0,25 Gew.-%.

Im Rahmen der Erfindung wird unter 2,4-Toluylendiisocyanat (2,4-TDI) ein Polyisocyanat mit einem Gehalt an 2,4-TDI von größer als 95 Gew.-%, bevorzugt von größer 97,5 Gew.-% und ganz besonders bevorzugt von größer 99 Gew.-% verstanden.

Als Polyolkomponente B) können die aus der Polyurethanchemie an sich bekannten Polyetherpolyole und/oder Polyesterpolyole verwendet werden.

Die als Polyolkomponente B) verwendbaren Polyetherpolyole sind dem Fachmann aus der Polyurethanchemie an sich bekannt. Diese werden typischerweise ausgehend von niedermolekularen mehrfachfunktionellen OH- oder NH-funktionellen Verbindungen als Starter durch Umsetzung mit cyclischen Ethern oder Mischungen verschiedener cyclischer Ether erhalten. Als Katalysatoren werden dabei Basen wie KOH oder Doppelmetallcyanid-basierende Systeme verwendet. Hierzu geeignete Herstellungsverfahren sind dem Fachmann an sich beispielsweise aus US-B 6 486 361 oder L.E.St. Pierre, Polyethers Part I, Polyalkylene Oxide and other Polyethers, Editor: Norman G. Gaylord; High Polymers Vol. XIII; Interscience Publishers; Newark 1963; S. 130 ff. bekannt.

Geeignete Starter weisen bevorzugt 2 - 8, besonders bevorzugt 2 - 6 zur Polyaddition mit cyclischen Ethern befähigte Wasserstoffatome auf. Derartige Verbindungen sind beispielsweise Wasser, Ethylenglykol, 1,2- oder 1,3-Propylenglykol, 1,3-Butandiol, 1,4-Butandiol, 1,6-Hexandiol, Bisphenol-A, Neopentylglykol, Glycerin, Trimethylolpropan, Pentaerythrit, Sorbit.

Als cyclische Ether kommen Alkylenoxide wie Ethylenoxid, Propylenoxid, Butylenoxid, Epichlorhydrin oder Styroloxid oder Tetrahydrofuran in Betracht.

Bevorzugte in B) eingesetzte Polyetherpolyole sind auf den vorstehend genannten Startern basierende Polyether mit Propylenoxid-, Ethylenoxid- und/oder Tetrahydrofuran-Einheiten, besonders bevorzugt mit Propylenoxid- und/oder Ethylenoxid-Einheiten.

Die als Polyolkomponente B) geeigneten Polyetherpolyole weisen zahlenmittlere Molekulargewichte von 200 bis 20 000 g/mol, bevorzugt 500 bis 12 000 g/mol und besonders bevorzugt 1000 bis 8000 g/mol auf. Maßgeblich für das Molekulargewicht ist die OH-Zahl des Polyols, bestimmt nach DIN 53240.

Unter den als Polyolkomponente B) verwendbaren Polyesterpolyolen werden im Rahmen der vorliegenden Erfindung Polyester mit mehr als einer OH-Gruppe, bevorzugt zwei endständigen OH-Gruppen verstanden. Solche Polyester sind dem Fachmann bekannt.

So können beispielsweise Polyesterpolyole verwendet werden, die durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton entstehen. Ebenfalls als polyfunktionelle Alkohole zur Herstellung von Polyesterpolyolen geeignet sind 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuss an Dicarbonsäuren und/oder Tricarbonsäuren, oder deren reaktiven Derivaten, zu Polyesterpolyolen kondensiert werden. Geeignete Dicarbonsäuren sind beispielsweise Adipinsäure oder Bernsteinsäure und ihre höhere Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Die genannten Säuren können einzeln oder als Gemische aus zwei oder mehr davon eingesetzt werden. Besonders geeignete Alkohole sind Hexandiol, Butandiol, Ethylenglykol, Diethylenglykol, Neopentylglykol, 3-Hydroxy-2,2-dimethylpropyl-3-hydroxy-2,2-dimethylpropanoat oder Trimethylolpropan oder Gemische aus zwei oder mehr davon. Besonders geeignete Säuren sind Phthalsäure, Isophthalsäure, Terephthalsäure, Adipinsäure oder Dodekandisäure oder deren Gemische.

Polyesterpolyole mit hohem Molekulargewicht umfassen beispielsweise die Umsetzungsprodukte von polyfunktionellen, bevorzugt difunktionellen Alkoholen (gegebenenfalls zusammen mit geringen Mengen an trifunktionellen Alkoholen) und polyfunktionellen, bevorzugt difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit bevorzugt 1 bis 3 C-Atomen eingesetzt werden. Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Dodekandisäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet.

Aus Lactonen, beispielsweise auf Basis von ε-Caprolacton, auch "Polycaprolactone" genannt, oder Hydroxycarbonsäuren, beispielsweise ω-Hydroxycapronsäure, erhältliche Polyester, können ebenfalls eingesetzt werden.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Die in B) verwendeten Polyesterpolyole weisen zahlenmittlere Molekulargewichte von 200 bis 10 000 g/mol, bevorzugt 1000 bis 6000 g/mol auf.

Die in C) eingesetzten Zirkonverbindungen entsprechen der oben genannten Definition der einzusetzenden fluortragenden Zirkon-(IV)-acetylacetonat-Komplexe.

Die Reaktion der monomeren asymmetrischen Diisocyanate mit den Polyolen erfolgt bei einer Temperatur von 20°C bis 150°C, bevorzugt 25 bis 100°C und insbesondere bevorzugt 40 bis 80°C.

Die Menge des verwendeten Katalysators kann von 1 bis 10000 ppm variieren, bevorzugt werden 20 bis 1000 ppm, besonders bevorzugt 100 bis 500 ppm bezogen auf Gesamtfeststoff eingesetzt.

Die Herstellung der erfindungsgemäßen Polyurethan-Prepolymere erfolgt bevorzugt in einem einstufigen Verfahren. Dabei werden die Polyole der Komponente B) einzeln oder als Mischung mit der Isocyanatkomponente A) vermischt und die homogene Mischung bis zum Erhalt eines konstanten NCO-Wertes gerührt. Als Reaktionstemperatur werden 20°C bis 150°C, vorzugsweise 25°C bis 100°C und besonders bevorzugt 40°C bis 80°C gewählt. Bevorzugt sind beide Reaktionspartner wie auch das Reaktionsprodukt bei der gewählten Reaktionstemperatur flüssig, so dass auf die Verwendung zusätzlicher Lösemittel zur Homogenisierung und Viskositätserniedrigung der Reaktionsmischung verzichtet werden kann.

Selbstverständlich kann die Herstellung der NCO-Endgruppen aufweisenden Polyurethanprepolymere auch kontinuierlich in einer Rührkesselkaskade oder geeigneten Mischaggregaten, wie beispielsweise schnelldrehenden Mischern nach dem Rotor-Stator-Prinzip, erfolgen.

Der NCO-Gehalt wird nach einem in der Polyurethanchemie üblichen NCO-titrimetrischen Verfahren nach DIN 1242 bestimmt.

Zum Abstoppen der Reaktion bzw. Katalysatordeaktivierung kann gegebenenfalls eine mineralische oder organische Säure wie Salzsäure, Schwefelsäure, Phosphorsäure oder deren Derivate, Ameisensäure, Essigsäure oder einer anderen Alkan- oder organischen Säure oder einer säurefreisetzenden Komponente, wie etwa Säurehalogenide zugegeben werden. Beispiele für geeignete Säurechloride sind Ameisensäurechlorid, Essigsäurechlorid, Propionsäurechlorid und Benzoylchlorid. Das Abstoppen der Reaktion ist insbesondere vorteilhaft, wenn während der Prepolymerherstellung einer der oben genannten bekannten aminischen oder metallorganischen Katalysatoren mitverwendet wurde.

Bevorzugt ist der Einsatz von Benzoylchlorid als Stopper.

Werden als Polyolkomponente B) ausschließlich Polyetherpolyole verwendet, so enthalten die erfindungsgemäßen reaktiven Polyurethan-Prepolymere kleiner 0,3 Gew.-%, bevorzugt kleiner 0,2 Gew.-% und insbesondere bevorzugt kleiner 0,1 Gew.-% monomeres asymmetrisches Diisocyanat.

Ansonsten werden Restmonomergehalte von kleiner 1,0 Gew.-%, bevorzugt kleiner 0,5 Gew.-% erreicht.

Die Viskosität der nach dem erfindungsgemäßen Verfahren bei der ausschließlichen Verwendung von Polyetherpolyolen hergestellten Polyurethan-Prepolymeren beträgt bei 25°C 100 mPa·s bis 150000 mPa·s, bevorzugt 500 mPa·s bis 100000 mPa·s und ganz besonders bevorzugt 500 mPa·s bis 80000 mPa·s.

Ein weiterer Gegenstand der Erfindung sind die nach dem erfindungsgemäßen Verfahren erhältlichen Prepolymere sowie deren Verwendung bei der Herstellung von Polyurethankunststoffen, Beschichtungen, Vergussmassen, Montageschäumen, Hart- und Integralschäumen, Verklebungen und/oder Dichtungen, wobei feuchtigkeitshärtende Dicht- und/oder Klebstoffe auf Basis der erfindungswesentlichen Prepolymere bevorzugt sind.

### Beispiele:

Sofern nicht abweichend vermerkt beziehen sich alle Prozentangaben auf Gewichtsprozent.

Die Viskositäten wurden bei den jeweils angegebenen Messtemperaturen mit Hilfe des Rotationsviskosimeters Viskotester VT 550 der Fa. Thermo Haake, Karlsruhe, DE mit dem Messbecher SV und der Messeinrichtung SV DIN 2 bestimmt.

Bei den Beispielen 1 - 3 erfolgte die Bestimmung des Gehalts an freiem monomerem Diisocyanat mittels HPLC nach Derivatisierung der Proben mit 9-(Methylaminomethyl)anthracen.
Gerät: HPLC-Gerät: Hewlett Packard, HP 1050
Detektion: Fluoreszenz-Detektor Hewlett Packard, HP 1046a
Wellenlänge: Ex. = 244 nm, Em. = 404 nm
Response Time = 1000 ms
PMT Gain = 10
Trennsäule: LiChrospher 60 RP select B, 5 µm (125 mm * 4,0 mm, Fa. Merck)
Mobile Phase: Eluent A: Acetonitril = 100 ml, Wasser = 900 ml, Tetrabutylammonium-hydrogensulfat = 2 g
Eluent B: Acetonitril = 900 ml, Wasser = 100 ml, Tetrabutylammonium-hydrogensulfat = 2 g
Gradient:

| T [min] | A [%] | B [%] |
|---|---|---|
| 0 | 40 | 60 |
| 5 | 40 | 60 |
| 8 | 10 | 90 |

Flussrate: 1,5 ml/min
Gesamtlaufzeit: 15 min
Postime: 5 min
Temperatur: 40° C
Injektionsvolumen: 10 µl

Bei den Beispielen 4-14 und den Vergleichsbeispielen 1 - 5 erfolgte die Bestimmung des Gehalts an freiem monomerem Diisocyanat mittels Gelpermeationschromatographie (GPC). Die Messung wurde bei Raumtemperatur durchgeführt. Als Elutionsmittel diente THF, die Flussrate betrug 1 ml/min und das Injektionsvolumen 50 µl. Als Trennsäulen dienten mit 5 µm Trennmaterial gepackte GPC-Säulen mit einer Porosität von 500 Å (MZ-Analysentechnik, Mainz, MZ-Gel SDplus). Die Gesamtlänge der Trennsäulen betrug 120 cm. Als Detektor wurde ein Brechungsindex-Detektor eingesetzt.

Die Bestimmung des NCO-Gehalts der Prepolymere bzw. Reaktionsmischungen erfolgte nach DIN EN 1242.
**Polyether A:** über DMC-Katalyse nach dem Impact® -Verfahren hergestelltes Polypropylenglykol mit einer nominellen Funktionalität von 2 und einer Hydroxylzahl von 56 mg KOH/g (Desmophen® 2062 BD, Bayer MaterialScience AG, Leverkusen, DE).
**Polyether B:** über DMC-Katalyse nach dem Impact® -Verfahren hergestelltes Polypropylenglykol mit einer nominellen Funktionalität von 2 und einer Hydroxylzahl von 28 mg KOH/g (Acclaim® 4200, Bayer MaterialScience AG, Leverkusen, DE).
**Polyether C:** über DMC-Katalyse nach dem Impact® -Verfahren hergestelltes Polypropylenglykol mit einer nominellen Funktionalität von 2 und einer Hydroxylzahl von 56 mg KOH/g (Desmophen 2061 BD, Bayer MaterialScience AG, Leverkusen, DE).
**Polyether D:** über DMC-Katalyse nach dem Impact® -Verfahren hergestelltes Polypropylenglykol mit einer nominellen Funktionalität von 3 und einer Hydroxylzahl von 28 mg KOH/g (Acclaim® 6300, Bayer MaterialScience AG, Leverkusen, DE).
**Polyether E:**
   Polyetherpolyol mit einer nominellen Funktionalität von 2 und einer Hydroxylzahl von 260 mg KOH/g, hergestellt durch Propoxylierung von Propylenglykol (Desmophen 1262 BD, Bayer MaterialScience AG, Leverkusen, DE).
**Polyester F:** Polyesterpolyol einer Zusammensetzung aus 33,5 Gew.-% 1,6-Hexandiol, 20,5 Gew.-% Neopentylglycol und 46,0 Gew.-% Adipinsäure, einer Hydroxylzahl von 56 mg KOH/g und einer Säurezahl von etwa 1,0 mg KOH/g.

**Katalysator A:** Zirkon-(IV)-hexafluoracetylacetonat, Strem Chemicals Inc., Kehl, DE
**Katalysator B:** Zirkon-(IV)-trifluoracetylacetonat, Sigma-Aldrich Chemie GmbH, München, DE
**Katalysator C:** Dibutylzinndilaurat (DBTL), Goldschmidt TIB GmbH, Mannheim, DE unter der Bezeichnung Tegokat® 218.

### Proglyde DMM: Dipropylenglycoldimethylether

### MPA: Methoxypropylacetat

### Beispiele 1A) bis 1G)

Die reaktiven Polyurethane gemäß Tabelle 1 wurden hergestellt, indem 2,4'-MDI mit einem Gehalt an 2,4'-lsomeren von mindestens 97,5 % als monomeres asymmetrisches Diisocyanat vorgelegt und auf 50°C aufgeheizt wurde. Anschließend wurde die Heizung abgestellt und der Polyether A innerhalb von 10 Minuten zudosiert. Bei einer Reaktionstemperatur von 80°C wurde die Umsetzung über einen Zeitraum von 4 Stunden fortgeführt. Anschließend wurde der Reaktionsansatz auf Raumtemperatur abgekühlt und der NCO-Gehalt, der Gehalt an freiem nicht umgesetztem monomerem 2,4'-MDI sowie die Viskosität bei 23 °C bestimmt. Die gemessenen Daten sind in der Tabelle 1 angegeben.

**Tabelle 1: Reaktion von 2,4'-MDI mit Polyether A bei verschiedenen Temperaturen; NCO/OH-Verhältnis 1:1. Die Viskosität wurde bei 23°C ermittelt.**

| **Bsp.** | **Val Kat** | **Kat-Verhältnis** | **Katalysator** | **Temp.** | **NCO [%]** | **Freies** ― **MDI [Gew.-%]** | **Viskosität [mPa*s]** |
|---|---|---|---|---|---|---|---|
| 1A | 5,834E-06 | 1,0 | DBTL | 80°C | 2,4 | 0,01 | 18700 |
| 1B | 8,75E-06 | 1,5 | Zirkon-(IV)-hexafluoracetylacetonat | 80°C | 2,4 | 0,01 | 18500 |
| 1C | 8,75E-06 | 1,5 | Bi 2-ethylhexanoat | 80°C | 2,5 | 0,05 | 20900 |
| 1D | 8,75E-06 | 1,5 | ohne | 80°C | 4,1 | n. v. | 1950 |
| 1E | 8,75E-06 | 1,5 | Zinn 2-ethylhexanoat | 80°C | 2,6 | n. v. | 31900 |
| 1F | 8,75E-06 | 1,5 | Silber-(I)-(1,5-Cyclopentadienyl)(Hexafluoro-acetylacetonat) | 80°C | 4,1 | n. v. | 2000 |
| 1G | 1,167E-05 | 2,0 | Zirkon-(IV)-trifluoracetylacetonat | 80°C | 2,7 | n. v. | 18700 |

| | | | | | | | |
|---|---|---|---|---|---|---|---|
| n. v. = Reaktion nicht vollständig | | | | | | | |

### Beispiele 2A) bis 2Y)

Die reaktiven Polyurethane gemäß Tabelle 2 wurden hergestellt, indem 2,4'-MDI mit einem Gehalt an 2,4'-lsomeren von mindestens 97,5 % als monomeres asymmetrisches Diisocyanat vorgelegt und auf 50°C aufgeheizt wurde. Anschließend wurde die Heizung abgestellt und der Polyether B innerhalb von 10 Minuten zudosiert. Bei einer Reaktionstemperatur von 60°C oder 80°C wurde die Umsetzung über einen Zeitraum von 2 oder 4 Stunden fortgeführt. Anschließend wurde der Reaktionsansatz auf Raumtemperatur abgekühlt und der NCO-Gehalt, der Gehalt an freiem nicht umgesetztem monomerem 2,4'-MDI sowie die Viskosität bei 23°C bestimmt. Die gemessenen Daten sind in der Tabelle 2 angegeben.

**Tabelle 2: Reaktion von 2,4'-MDI mit Polyether B bei verschiedenen Temperaturen; NCO/OH-Verhältnis 1:1. Die Viskosität wurde bei 23°C ermittelt.**

| **Bsp.** | **Val Kat** | **Kat-Verhältnis** | **Katalysator** | **Dauer** | **Temp.** | **NCO [%]** | **Freies MDI [Gew.-%]** | **Viskosität [mPa*s]** |
|---|---|---|---|---|---|---|---|---|
| 2A | 0,0000052 | 1,0 | B(OEt)₃ | 4 h | 80°C | n. v. | | |
| 2B | 0,0000157 | 3,0 | B(OEt)₃ | 4 h | 80°C | n. v. | | |
| 2C | 0,0000052 | 1,0 | Bi-2-ethylhexanoat | 4 h | 60°C | 1,3 | 0,01 | 16900 |
| 2D | 0,0000079 | 1,5 | Bi-2-ethylhexanoat | 2 h | 80°C | 1,3 | 0,07 | 20100 |
| 2E | 7,859E-06 | 1,5 | Bi-2-ethylhexanoat | 2 h | 80°C | 1,4 | 0,12 | 19700 |
| 2F | 0,0000052 | 1,0 | Bi-neodecanoat | 4 h | 60°C | 1,3 | 0,01 | 17100 |
| 2G | 0,0000079 | 1,5 | Bi-neodecanoat | 2 h | 80°C | 1,4 | 0,06 | 19300 |
| 2H | 7,859E-06 | 1,5 | Bi neodecanoat | 2 h | 80°C | 1,4 | 0,04 | 20800 |
| 2J | 0,0000157 | 3,0 | Boran-Pyridin-Komplex | 4h | 60°C | n. v. | | |
| 2K | 0,0000157 | 3,0 | Boran-Pyridin-Komplex | 4h | 60°C | n. v. | | |
| 2L | 0,0000052 | 1,0 | DBTL | 4 h | 60°C | 1,4 | 0,01 | 15700 |
| 2M | 0,0000052 | 1,0 | DBTL | 2 h | 80°C | 1,3 | 0,01 | 17400 |
| 2N | 0,0000052 | 1,0 | DBTL | 2 h | 80°C | 1,3 | 0,01 | 19500 |
| 20 | 0,0000262 | 5,0 | Sb(OiPr)₃ | 4 h | 80°C | n. v. | | |
| 2P | 0,0000052 | 1,0 | Sn 2-ethylhexanoat | 4 h | 60°C | 1,3 | 0,21 | 27700 |
| 2Q | 0,0000079 | 1,5 | Sn 2-ethylhexanoat | 2 h | 80°C | 1,3 | 0,34 | 28600 |
| 2R | 7,859E-06 | 1,5 | Sn 2-ethylhexanoat | 2 h | 80°C | 1,5 | 0,38 | 33100 |
| 2S | 0,0000157 | 3,0 | Tetrakis(dimethyl amino)silan | 4h | 60°C | n. v. | | |
| 2T | 0,0000157 | 3,0 | Tetrakis(dimethyl amino)silan | 4h | 60°C | n.v | | |
| 2U | 0,0000262 | 5,0 | Ti(OBu)₄ | 4 h | 60°C | 1,4 | 0,01 | 19400 |
| 2V | 0,0000052 | 1,0 | Ti(OBu)₄ | 4 h | 60°C | n. v. | | |
| 2W | 0,0000157 | 3,0 | Tris-(dimethylamino)-boran | 4 h | 60°C | n. v. | | |
| 2X | 0,0000262 | 5,0 | VO(OiPr)₃ | 4 h | 80°C | n. v. | | |
| 2Y | 0,0000052 | 1,0 | Zn 2-ethylhexanoat | 4 h | 60°C | 1,5 | 0,04 | 16400 |

| | | | | | | | | |
|---|---|---|---|---|---|---|---|---|
| n. v. = Reaktion nicht vollständig | | | | | | | | |

### Beispiele 3A) bis 3M)

Die reaktiven Polyurethane gemäß Tabelle 3 wurden hergestellt, indem 2,4'-MDI mit einem Gehalt an 2,4'-lsomeren von mindestens 97,5% als monomeres asymmetrisches Diisocyanat in dem in der Tabelle angegeben Lösungsmittel in der entsprechenden Konzentration vorgelegt und auf 50°C aufgeheizt wurde. Anschließend wurde die Heizung abgestellt und der Polyether B innerhalb von 10 Minuten zudosiert. Bei einer Reaktionstemperatur von 80°C wurde die Umsetzung über einen Zeitraum 4 Stunden (Versuch 3h: 2 Stunden) fortgeführt. Anschließend wurde der Reaktionsansatz auf Raumtemperatur abgekühlt und der NCO-Gehalt, der Gehalt an freiem nicht umgesetztem monomerem 2,4'-MDI sowie die Viskosität bei 23°C bestimmt. Die gemessenen Daten sind in der Tabelle 3 angegeben.

**Tabelle 3: Reaktion von 2,4'-MDI mit Polyether B bei verschiedenen Temperaturen; NCO/OH-Verhältnis 1:1. Die Viskosität wurde bei 23°C ermittelt.**

| **Bsp.** | **Val Kat** | **Kat-Verh:** | **Katalysator** | **Konz.** | **Dauer** | **Temp.** | **NCO** | **MDI [Gew.-%]** | **Viskos. [mPa*s]** |
|---|---|---|---|---|---|---|---|---|---|
| 3A | 0,0000157 | 3,0 | Aluminium-(III)-trifluoracetylacetonat | 10%ig MPA | 4 h | 80°C | n. v. | | 2190 |
| 3B | 0,0000052 | 1,0 | DBTL | 10%ig | 4 h | 80°C | 1,32 | < 0,1 | 16330 |
| 3C | 0,0000157 | 3,0 | Eisen-(III)- hexafluoracetylacetonat | 10%ig MPA | 4 h | 80°C | 1,28 | < 0,1 | 24000 |
| 3D | 0,0000157 | 3,0 | Ethyltrimethyoxy-germanium | 10%ig MPA | 4h | 80°C | n.v. | ? | 2140 |
| 3E | 0,0000157 | 3,0 | Kupfer-(II)-trifluoracetylacetonat | 10%ig MPA | 4 h | 80°C | 1,6 | 0,2 | 10440 |
| 3F | 0,0000157 | 3,0 | Magnesium-(II)- hexafluoracetylacetonat | 10%ig MPA | 4 h | 80°C | n. v. | | 1940 |
| 3G | | 0,0 | ohne | 10%ig | 4 h | 80°C | n. v. | | 2220 |
| 3H | 7,859E-06 | 1,5 | Trimethylantimondichlorid | 10%ig MPA | 2h | 80°C | n. v. | | |
| 3J | 0,0000157 | 3,0 | Yttrium-(III)-hexafluoracetylacetonat | 10%ig MPA | 4 h | 80°C | n. v. | | 2220 |
| 3K | 0,0000157 | 3,0 | Zinn-(II)-hexafluoracetylacetonat | 10%ig MPA | 4 h | 80°C | 1,43 | 0,2 2 | 19550 |
| 3L | 8,75E-06 | 1,5 | Zirkon-(IV)-hexafluoracetylacetonat | 10%ig in Proglyde DMM | 4 h | 80°C | 1,32 | 0,01 | 16550 |
| 3M | 1,167E-OS | 2,0 | Zirkon-(IV)-trifluoracetylacetonat | 10%ig in Proglyde DMM | 4 h | 80°C | 1,34 | < 0,1 | 18800 |

| | | | | | | | | | |
|---|---|---|---|---|---|---|---|---|---|
| n. v. = Reaktion nicht vollständig | | | | | | | | | |

### Beispiel 4:

In einem heiz- und kühlbaren Glaskolben, der mit einem Rührwerk und einem Tropftrichter versehen war, wurden bei einer Temperatur von 50°C 20,26 g (0,081 mol) 2,4'-MDI (Gehalt am 2,4'-Isomeren > 97,5 %) aufgeschmolzen. Zum aufgeschmolzenen Diisocyanat wurde unter Rühren zuerst 30 mg Katalysator A und anschließend 179,74 g (0,045 mol) Polyether B, der zuvor bei einer Temperatur von 100°C und einem Vakuum von 15 mbar entwässert wurde, so zugegeben, dass die Temperatur von 50°C nicht anstieg. Nach der vollständigen Zugabe des Polyethers, wurde die Reaktionsmischung auf 60°C erwärmt und bei dieser Temperatur weitergerührt, bis nach einer Reaktionszeit von 4 Stunden ein konstanter NCO-Gehalt von 1,43 % (Theorie: 1,51 %) erreicht wurde. Danach wurde der Katalysator durch Zugabe von 45 mg Benzoylchlorid deaktiviert und das Produkt abgefüllt. Das Endprodukt hatte einen NCO-Gehalt von 1,43 %.

### Beispiel 5:

In einem heiz- und kühlbaren Glaskolben, der mit einem Rührwerk und einem Tropftrichter versehen war, wurden bei einer Temperatur von 50°C 20,26 g (0,081 mol) 2,4'-MDI (Gehalt am 2,4'-Isomeren > 97,5 %) aufgeschmolzen. Zum aufgeschmolzenen Diisocyanat wurde unter Rühren zuerst 30 mg Katalysator B und anschließend 179,74 g (0,045 mol) Polyether B, der zuvor bei einer Temperatur von 100°C und einem Vakuum von 15 mbar entwässert wurde, so zugegeben, dass die Temperatur von 50°C nicht anstieg. Nach der vollständigen Zugabe des Polyethers, wurde die Reaktionsmischung auf 60°C erwärmt und bei dieser Temperatur weitergerührt, bis nach einer Reaktionszeit von 4 Stunden ein konstanter NCO-Gehalt von 1,42 % (Theorie: 1,51 %) erreicht wurde. Danach wurde der Katalysator durch Zugabe von 45 mg Benzoylchlorid deaktiviert und das Produkt abgefüllt. Das Endprodukt hatte einen NCO-Gehalt von 1,42 %.

### Beispiel 6:

In einem heiz- und kühlbaren Glaskolben, der mit einem Rührwerk und einem Tropftrichter versehen war, wurden bei einer Temperatur von 50°C 151,53 g (0,606 mol) 2,4'-MDI (Gehalt am 2,4'-Isomeren > 97,5 %) aufgeschmolzen. Zum aufgeschmolzenen Diisocyanat wurde unter Rühren zuerst 225 mg Katalysator A und anschließend eine, zuvor bei einer Temperatur von 100°C und einem Vakuum von 15 mbar entwässerte, Mischung aus 269,70 g (0,067 mol) Polyether B und 1078,77 g (0,18 mol) Polyether D so zugegeben, dass die Temperatur von 50°C nicht anstieg. Nach der vollständigen Zugabe der Polyethermischung, wurde die Reaktionsmischung auf 60°C erwärmt und bei dieser Temperatur weitergerührt, bis nach einer Reaktionszeit von 2 Stunden ein konstanter NCO-Gehalt von 1,50 % (Theorie: 1,50 %) erreicht wurde. Danach wurde der Katalysator durch Zugabe von 375 mg Benzoylchlorid deaktiviert und das Produkt abgefüllt. Das Endprodukt hatte einen NCO-Gehalt von 1,50 %.

### Beispiel 7:

In einem heiz- und kühlbaren Glaskolben, der mit einem Rührwerk und einem Tropftrichter versehen war, wurden bei einer Temperatur von 50°C 151,53 g (0,606 mol) 2,4'-MDI (Gehalt am 2,4'-Isomeren > 97,5 %) aufgeschmolzen. Zum aufgeschmolzenen Diisocyanat wurde unter Rühren zuerst 225 mg Katalysator A und anschließend eine, zuvor bei einer Temperatur von 100°C und einem Vakuum von 15 mbar entwässerte, Mischung aus 1078,77 g (0,27 mol) Polyether B und 269,70 g (0,045 mol) Polyether D so zugegeben, dass die Temperatur von 50°C nicht anstieg. Nach der vollständigen Zugabe der Polyethermischung, wurde die Reaktionsmischung auf 60°C erwärmt und bei dieser Temperatur weitergerührt, bis nach einer Reaktionszeit von 2 Stunden ein konstanter NCO-Gehalt von 1,36 % (Theorie: 1,50 %) erreicht wurde. Danach wurde der Katalysator durch Zugabe von 375 mg Benzoylchlorid deaktiviert und das Produkt abgefüllt. Das Endprodukt hatte einen NCO-Gehalt von 1,36 %.

### Beispiel 8:

In einem heiz- und kühlbaren Glaskolben, der mit einem Rührwerk und einem Tropftrichter versehen war, wurden bei einer Temperatur von 50°C 32,85 g (0,131 mol) 2,4'-MDI (Gehalt am 2,4'-Isomeren > 97,5 %) aufgeschmolzen. Zum aufgeschmolzenen Diisocyanat wurde unter Rühren zuerst 30 mg Katalysator A und anschließend 167,15 g (0,084 mol) Polyether C, der zuvor bei einer Temperatur von 100°C und einem Vakuum von 15 mbar entwässert wurde, so zugegeben, dass die Temperatur von 50°C nicht anstieg. Nach der vollständigen Zugabe des Polyethers, wurde die Reaktionsmischung auf 60°C erwärmt und bei dieser Temperatur weitergerührt, bis nach einer Reaktionszeit von 2 Stunden ein konstanter NCO-Gehalt von 2,13 % (Theorie: 2,0 %) erreicht wurde. Danach wurde der Katalysator durch Zugabe von 40 mg Benzoylchlorid deaktiviert und das Produkt abgefüllt. Das Endprodukt hatte einen NCO-Gehalt von 2,13 %.

### Beispiel 9:

In einem heiz- und kühlbaren Glaskolben, der mit einem Rührwerk und einem Tropftrichter versehen war, wurden bei einer Temperatur von 50°C 35,51 g (0,142 mol) 2,4'-MDI (Gehalt am 2,4'-Isomeren > 97,5 %) aufgeschmolzen. Zum aufgeschmolzenen Diisocyanat wurde unter Rühren zuerst 30 mg Katalysator A und anschließend 164,49 g (0,082 mol) Polyether C, der zuvor bei einer Temperatur von 100°C und einem Vakuum von 15 mbar entwässert wurde, so zugegeben, dass die Temperatur von 50°C nicht anstieg. Nach der vollständigen Zugabe des Polyethers, wurde die Reaktionsmischung auf 60°C erwärmt und bei dieser Temperatur weitergerührt, bis nach einer Reaktionszeit von 4 Stunden ein konstanter NCO-Gehalt von 2,46 % (Theorie: 2,5 %) erreicht wurde. Danach wurde der Katalysator durch Zugabe von 40 mg Benzoylchlorid deaktiviert und das Produkt abgefüllt. Das Endprodukt hatte einen NCO-Gehalt von 2,46 %.

### Beispiel 10:

In einem heiz- und kühlbaren Glaskolben, der mit einem Rührwerk und einem Tropftrichter versehen war, wurden bei einer Temperatur von 50°C 36,68 g (0,147 mol) reines 2,4'-MDI (Gehalt am 2,4'-Isomeren > 97,5 %) aufgeschmolzen. Zum aufgeschmolzenen Diisocyanat wurde unter Rühren zuerst 30 mg Katalysator A und anschließend 163,32 g (0,082 mol) Polyether C, der zuvor bei einer Temperatur von 100°C und einem Vakuum von 15 mbar entwässert wurde, so zugegeben, dass die Temperatur von 50°C nicht anstieg. Nach der vollständigen Zugabe des Polyethers, wurde die Reaktionsmischung auf 60°C erwärmt und bei dieser Temperatur weitergerührt, bis nach einer Reaktionszeit von 5 Stunden ein konstanter NCO-Gehalt von 2,69 % (Theorie: 2,74 %) erreicht wurde. Danach wurde der Katalysator durch Zugabe von 40 mg Benzoylchlorid deaktiviert und das Produkt abgefüllt. Das Endprodukt wies einen NCO-Gehalt von 2,69 % auf.

### Beispiel 11:

In einem heiz- und kühlbaren Glaskolben, der mit einem Rührwerk und einem Tropftrichter versehen war, wurden bei einer Temperatur von 50°C 96,16 g (0,385 mol) reines 2,4'-MDI (Gehalt am 2,4'-Isomeren > 97,5 %) aufgeschmolzen. Zum aufgeschmolzenen Diisocyanat wurde unter Rühren zuerst 30 mg Katalysator A und anschließend 103,86 g (0,242 mol) Polyether E, der zuvor bei einer Temperatur von 100°C und einem Vakuum von 15 mbar entwässert wurde, so zugegeben, dass die Temperatur von 50°C nicht anstieg. Nach der vollständigen Zugabe des Polyethers, wurde die Reaktionsmischung auf 60°C erwärmt und bei dieser Temperatur weitergerührt, bis nach einer Reaktionszeit von 3,5 Stunden ein konstanter NCO-Gehalt von 5,67 % (Theorie: 6,0 %) erreicht wurde. Danach wurde der Katalysator durch Zugabe von 40 mg Benzoylchlorid deaktiviert und das Produkt abgefüllt. Das Endprodukt wies einen NCO-Gehalt von 5,67 % auf.

### Beispiel 12:

In einem heiz- und kühlbaren Glaskolben, der mit einem Rührwerk und einem Tropftrichter versehen war, wurden bei einer Temperatur von 50°C 47,7 g (0,191 mol) reines 2,4'-MDI (Gehalt am 2,4'-Isomeren > 97,5 %) aufgeschmolzen. Zum aufgeschmolzenen Diisocyanat wurde unter Rühren zuerst 30 mg Katalysator A und anschließend eine, zuvor bei einer Temperatur von 100°C und einem Vakuum von 15 mbar entwässerte, Mischung aus 113,22 g (0,028 mol) Polyether B und 39,08 g (0,091 mol) Polyether E so zugegeben, dass die Temperatur von 50°C nicht anstieg. Nach der vollständigen Zugabe der Polyethermischung, wurde die Reaktionsmischung auf 60°C erwärmt und bei dieser Temperatur weitergerührt, bis nach einer Reaktionszeit von 4 Stunden ein konstanter NCO-Gehalt von 2,84 % (Theorie: 3,0 %) erreicht wurde. Danach wurde der Katalysator durch Zugabe von 40 mg Benzoylchlorid deaktiviert und das Produkt abgefüllt. Das Endprodukt wies einen NCO-Gehalt von 2,84 % auf.

### Beispiel 13:

In einem heiz- und kühlbaren Glaskolben, der mit einem Rührwerk und einem Tropftrichter versehen war, wurden bei einer Temperatur von 70°C 37,74 g (0,151 mol) reines 2,4'-MDI (Gehalt am 2,4'-Isomeren > 97,5 %) aufgeschmolzen. Zum aufgeschmolzenen Diisocyanat wurde unter Rühren zuerst 30 mg Katalysator B und anschließend 162,26 g (0,084 mol) Polyester F, der zuvor bei einer Temperatur von 100°C und einem Vakuum von 15 mbar entwässert wurde, so zugegeben, dass die Temperatur von 70°C nicht anstieg. Nach der vollständigen Zugabe des Polyesters, wurde die Reaktionsmischung bei 70°C weitergerührt, bis nach einer Reaktionszeit von 1 Stunde ein konstanter NCO-Gehalt von 2,79 % (Theorie: 2,82 %) erreicht wurde. Danach wurde der Katalysator durch Zugabe von 60 mg Benzoylchlorid deaktiviert und das Produkt abgefüllt. Das Endprodukt wies einen NCO-Gehalt von 2,79 % auf.

### Beispiel 14:

In einem heiz- und kühlbaren Glaskolben, der mit einem Rührwerk und einem Tropftrichter versehen war, wurden bei einer Temperatur von 70°C 37,74 g (0,151 mol) reines 2,4'-MDI (Gehalt am 2,4'-Isomeren > 97,5 %) aufgeschmolzen. Zum aufgeschmolzenen Diisocyanat wurde unter Rühren zuerst 30 mg Katalysator A und anschließend 162,26 g (0,084 mol) Polyester F, der zuvor bei einer Temperatur von 100°C und einem Vakuum von 15 mbar entwässert wurde, so zugegeben, dass die Temperatur von 70°C nicht anstieg. Nach der vollständigen Zugabe des Polyesters, wurde die Reaktionsmischung bei 70°C weitergerührt, bis nach einer Reaktionszeit von 1,5 Stunden ein konstanter NCO-Gehalt von 2,78 % (Theorie: 2,82 %) erreicht wurde. Danach wurde der Katalysator durch Zugabe von 60 mg Benzoylchlorid deaktiviert und das Produkt abgefüllt. Das Endprodukt wies einen NCO-Gehalt von 2,78 % auf.

### Vergleichsbeispiel 1:

In einem heiz- und kühlbaren Glaskolben, der mit einem Rührwerk und einem Tropftrichter versehen war, wurden bei einer Temperatur von 50°C 36,68 g (0,147 mol) reines 2,4'-MDI (Gehalt am 2,4'-Isomeren > 97,5 %) aufgeschmolzen. Zum aufgeschmolzenen Diisocyanat wurde unter Rühren 163,32 g (0,082 mol) Polyether C, der zuvor bei einer Temperatur von 100°C und einem Vakuum von 15 mbar entwässert wurde, so zugegeben, dass die Temperatur von 50°C nicht anstieg. Nach der vollständigen Zugabe des Polyethers, wurde die Reaktionsmischung auf 60°C erwärmt und bei dieser Temperatur weitergerührt, bis nach einer Reaktionszeit von 32 Stunden ein konstanter NCO-Gehalt von 2,73 % (Theorie: 2,74 %) erreicht wurde. Danach das Produkt abgefüllt. Das Endprodukt wies einen NCO-Gehalt von 2,73 % auf.

### Vergleichsbeispiel 2:

In einem heiz- und kühlbaren Glaskolben, der mit einem Rührwerk und einem Tropftrichter versehen war, wurden bei einer Temperatur von 50°C 36,68 g (0,147 mol) reines 2,4'-MDI (Gehalt am 2,4'-Isomeren > 97,5 %) aufgeschmolzen. Zum aufgeschmolzenen Diisocyanat wurde unter Rühren zuerst 20 mg Katalysator C und anschließend 163,32 g (0,082 mol) Polyether C, der zuvor bei einer Temperatur von 100°C und einem Vakuum von 15 mbar entwässert wurde, so zugegeben, dass die Temperatur von 50°C nicht anstieg. Nach der vollständigen Zugabe des Polyethers, wurde die Reaktionsmischung auf 60°C erwärmt und bei dieser Temperatur weitergerührt, bis nach einer Reaktionszeit von 5 Stunden ein konstanter NCO-Gehalt von 2,72 % (Theorie: 2,74 %) erreicht wurde. Danach wurde der Katalysator durch Zugabe von 30 mg Benzoylchlorid deaktiviert und das Produkt abgefüllt. Das Endprodukt wies einen NCO-Gehalt von 2,72 % auf.

### Vergleichsbeispiel 3:

In einem heiz- und kühlbaren Glaskolben, der mit einem Rührwerk und einem Tropftrichter versehen war, wurden bei einer Temperatur von 50°C 20,26 g (0,081 mol) reines 2,4'-MDI (Gehalt am 2,4'-Isomeren > 97,5 %) aufgeschmolzen. Zum aufgeschmolzenen Diisocyanat wurde unter Rühren 179,74 g (0,045 mol) Polyether B, der zuvor bei einer Temperatur von 100°C und einem Vakuum von 15 mbar entwässert wurde, so zugegeben, dass die Temperatur von 50°C nicht anstieg. Nach der vollständigen Zugabe des Polyethers, wurde die Reaktionsmischung auf 60°C erwärmt und bei dieser Temperatur weitergerührt, bis nach einer Reaktionszeit von 60 Stunden ein konstanter NCO-Gehalt von 1,49 % (Theorie: 1,51 %) erreicht wurde. Danach das Produkt abgefüllt. Das Endprodukt wies einen NCO-Gehalt von 1,49 % auf.

### Vergleichsbeispiel 4:

In einem heiz- und kühlbaren Glaskolben, der mit einem Rührwerk und einem Tropftrichter versehen war, wurden bei einer Temperatur von 50°C 20,26 g (0,081 mol) reines 2,4'-MDI (Gehalt am 2,4'-Isomeren > 97,5 %) aufgeschmolzen. Zum aufgeschmolzenen Diisocyanat wurde unter Rühren zuerst 20 mg Katalysator C und anschließend 179,74 g (0,045 mol) Polyether C, der zuvor bei einer Temperatur von 100°C und einem Vakuum von 15 mbar entwässert wurde, so zugegeben, dass die Temperatur von 50°C nicht anstieg. Nach der vollständigen Zugabe des Polyethers, wurde die Reaktionsmischung auf 60°C erwärmt und bei dieser Temperatur weitergerührt, bis nach einer Reaktionszeit von 4 Stunden ein konstanter NCO-Gehalt von 1,37 % (Theorie: 1,51 %) erreicht wurde. Danach wurde der Katalysator durch Zugabe von 30 mg Benzoylchlorid deaktiviert und das Produkt abgefüllt. Das Endprodukt wies einen NCO-Gehalt von 1,37 % auf.

### Vergleichsbeispiel 5:

In einem heiz- und kühlbaren Glaskolben, der mit einem Rührwerk und einem Tropftrichter versehen war, wurden bei einer Temperatur von 70°C 37,74 g (0,151 mol) reines 2,4'-MDI (Gehalt am 2,4'-Isomeren > 97,5 %) aufgeschmolzen. Zum aufgeschmolzenen Diisocyanat wurde unter Rühren 162,26 g (0,084 mol) Polyester F, der zuvor bei einer Temperatur von 100°C und einem Vakuum von 15 mbar entwässert wurde, so zugegeben, dass die Temperatur von 70°C nicht anstieg. Nach der vollständigen Zugabe des Polyesters, wurde die Reaktionsmischung bei 70°C weitergerührt, bis nach einer Reaktionszeit von 7,5 Stunden ein konstanter NCO-Gehalt von 2,82 % (Theorie: 2,82 %) erreicht wurde. Danach wurde das Produkt abgefüllt. Das Endprodukt wies einen NCO-Gehalt von 2,82 % auf.

**Tabelle 4: Restmonomergehalte und Viskositäten der Beispiele 4 - 12 und der Vergleichsbeispiele 1 - 4**

| **Beispiele** | **Restmonomer [Gew.-%]** | **Viskosität bei 25°C [mPa*s]** | **Viskosität bei 100 °C [mPa*s]** |
|---|---|---|---|
| 4 | < 0,05 | 16000 | 425 |
| 5 | 0,1 | 17900 | 410 |
| 6 | < 0,1 | 19750 | 648 |
| 7 | < 0,1 | 20700 | 598 |
| 8 | 0,1 | 13900 | 269 |
| 9 | 0,1 | 12700 | 227 |
| 10 | 0,2 | 16200 | 315 |
| 11 | 0,2 | nicht bestimmt | 672 |
| 12 | < 0,05 | 81800 | 557 |
| V1 | 0,9 | 18450 | 333 |
| V2 | 0,3 | 16390 | 410 |
| V3 | 0,5 | 15900 | 521 |
| V4 | < 0,05 | 18425 | 445 |

**Tabelle 5: Restmonomergehalte und Viskositäten der Beispiele 13 - 14 und des Vergleichsbeispiels 5**

| **Beispiel** | **Restmonomer [Gew.-%]** | **Viskosität bei 100°C [mPa*s]** |
|---|---|---|
| 13 | 0,9 | 1830 |
| 14 | 1,0 | 1740 |
| V5 | 1,7 | 2760 |

Anhand der Beispiele und Vergleichsbeispiele wird deutlich, dass es durch die Verwendung der erfindungsgemäßen Katalysatoren gelingt, reaktive Polyurethan-Prepolymere mit drastisch reduzierten Restmonomergehalten bei gleichzeitig deutlich geringerer Viskosität herzustellen und auf die Verwendung zinnhaltiger Katalysatoren verzichtet werden kann.

## Patentansprüche

1. Verfahren zur Herstellung von NCO-funktionellen Polyurethanprepolymeren mit einem NCO-Gehalt von 0,2 - 12 Gew.%, bei dem
A) mindestens ein monomeres asymmetrisches Diisocyanat mit einem Molekulargewicht von 160 g/mol bis 500 g/mol und
B) mindestens ein Polyetherpolyol und/oder Polyesterpolyol
C) in Gegenwart von Zirkon-(IV)-acetylacetonat-Komplexen, wobei wenigstens ein im Katalysator enthaltener Acetylacetonatligand einen Fluorsubstituenten trägt,
in einem Verhältnis von Isocyanatgruppen zu Hydroxylgruppen von 1,05 zu 1 bis 2,0 zu 1 miteinander umgesetzt werden.

2. Verfahren gemäß Anspruch 1, **dadurch gekennzeichnet, dass** als asymmetrische Diisocyanate in Komponente A) 2,4-Toluylendiisocyanat (2,4-TDI), Diphenylmethan-2,4'-diisocyanat (2,4'-MDI), 1-Isocyanatomethyl-3-isocyanato-1,5,5-trimethyl-cyclohexan (Isophorondiisocyanat, IPDI) oder deren Mischungen eingesetzt werden.

3. Verfahren gemäß Anspruch 1 oder 2, **dadurch gekennzeichnet, dass** in C) Zirkon-(IV)-acetylacetonat-Komplexe eingesetzt werden, die als Liganden ausschließlich Acetylacetonatliganden mit jeweils wenigstens einer CF₃-Gruppe tragen.

4. NCO-funktionelle Polyurethanprepolymere erhältlich aus einem Verfahren gemäß einem der Ansprüche 1 bis 3.

5. Beschichtungen, Verklebungen und/oder Dichtmassen erhältlich unter Verwendung von NCO-funktionellen Polyurethanprepolymeren gemäß Anspruch 4.

## Claims

1. Process for preparing NCO-functional polyurethane prepolymers having an NCO content of 0.2% - 12% by weight, in which
A) at least one monomeric asymmetric diisocyanate having a molecular weight of 160 g/mol to 500 g/mol and
B) at least one polyetherpolyol and/or polyesterpolyol
C) are reacted with one another in the presence of zirconium(IV) acetylacetonate complexes, at least one acetylacetonate ligand present in the catalyst bearing a fluorine substituent,
in a ratio of isocyanate groups to hydroxyl groups of 1.05 : 1 to 2.0 : 1.

2. Process according to Claim 1, **characterized in that** as asymmetric diisocyanates in component A) use is made of 2,4-tolylene diisocyanate (2,4-TDI), diphenylmethane 2,4'-diisocyanate (2,4'-MDI), 1-isocyanatomethyl-3-isocyanato-1,5,5-trimethylcyclohexane (isophorone diisocyanate, IPDI) or mixtures thereof.

3. Process according to Claim 1 or 2, **characterized in that** in C) zirconium(IV) acetylacetonate complexes are used which bear as ligands exclusively acetylacetonate ligands having in each case at least one CF₃ group.

4. NCO-functional polyurethane prepolymers obtainable from a process according to any one of Claims 1 to 3.

5. Coatings, adhesive bonds and/or sealants obtainable using NCO-functional polyurethane prepolymers according to Claim 4.

## Revendications

1. Procédé pour la préparation de prépolymères de polyuréthane à fonctionnalité NCO présentant une teneur en NCO de 0,2-12% en poids, dans lequel on transforme
A) au moins un diisocyanate asymétrique monomère présentant un poids moléculaire de 160 g/mole à 500 g/mole et
B) au moins un polyétherpolyol et/ou polyesterpolyol
C) en présence de complexes d'acétylacétonate de zirconium (IV), au moins un ligand acétylacétonate contenu dans le catalyseur portant un substituant fluoré,
dans un rapport de groupes isocyanate à groupes hydroxyle de 1,05:1 à 2,0:1 les uns par rapport aux autres.

2. Procédé selon la revendication 1, **caractérisé en ce qu'**on utilise comme diisocyanates asymétriques dans le composant A) du 2,4-toluylènediisocyanate (2,4-TDI), du diphénylméthane-2,4'-diisocyanate (2,4'-MDI), du 1-isocyanatométhyl-3-isocyanato-1,5,5-triméthylcyclohexane (isophoronediisocyanate, IPDI) ou leurs mélanges.

3. Procédé selon la revendication 1 ou 2, **caractérisé en ce qu'**on utilise, dans C), des complexes d'acétylacétonate de zirconium (IV), qui portent, comme ligands, exclusivement des ligands acétylacétonate présentant à chaque fois au moins un groupe CF₃.

4. Prépolymères de polyuréthane à fonctionnalité NCO pouvant être obtenus selon un procédé selon l'une quelconque des revendications 1 à 3.

5. Revêtements, collages et/ou masses d'étanchéité pouvant être obtenus avec utilisation de prépolymères de polyuréthane à fonctionnalité NCO selon la revendication 4.
